# EUROPÄISCHE PATENTANMELDUNG

(11) **EP 4 036 510 A1**
(43) Veröffentlichungstag der Anmeldung: **03.08.2022**
(21) Anmeldenummer: 22152616.3
(22) Anmeldetag: 21.01.2022
(51) Int. Cl.: F28F 3/02

(54) **VORRICHTUNG ZUR ABKÜHLUNG UND TROCKNUNG VON LUFT**

(30) Priorität: 27.01.2021 DE 202021100397 U
(71) Anmelder: AKG Verwaltungsgesellschaft mbH, 34369 Hogeismar (DE)
(72) Erfinder: HAKENBECK, Tom, 34119 Kassel (DE); KÖRNER, Harald, 34359 Reinhardshagen (DE); PALM, Hans-Jürgen, 34246 Vellmar (DE); PÜHL, Bastian, 34388 Trendelburg (DE)
(74) Vertreter: Specht, Peter

(57) **Zusammenfassung**

Die Erfindung betrifft eine Vorrichtung zur Abkühlung und Trocknung von Luft, insbesondere für Druckluftanlagen, aufweisend einen Luft/Luft-Wärmeaustauscher (2) mit einem Lufteinlass (21) und einem Luftauslass (22), einen Kältemittel/Luft-Wärmeaustauscher (3) mit einem Kältemitteleinlass (31) und einem Kältemittelauslass (32), einen zwischen dem Luft/Luft-Wärmeaustauscher (2) und dem Kältemittel/Luft-Wärmeaustauscher (3) angeordneten Kondensatabscheider (4) wobei der Kondensatabscheider (4) eine Abscheidekammer (47) mit einem Kondensatauslass (48) aufweist, wobei in der Abscheidekammer (47) wenigstens eine geneigt zu einer Hauptdurchströmungsrichtung (S) der Luft ausgerichtete Lamelle (6) zur Kondensatabscheidung angeordnet ist.

## Beschreibung

Die vorliegende Erfindung betrifft eine Vorrichtung zur Abkühlung und Trocknung von Luft, insbesondere für Druckluftanlagen gemäß dem Oberbegriff des Anspruchs 1.

Eine gattungsgemäße Vorrichtung ist beispielsweise aus der US 7343755 B2 bekannt. Derartige Vorrichtungen bestehen im Wesentlichen aus einem Luft/Luft-Wärmeaustauscher sowie einem Kältemittel/Luft-Wärmeaustauscher und einem zwischen den beiden Wärmeaustauschern integrierten Kondensatabscheider.

Zur Trocknung von warmer und feuchter Luft, insbesondere Druckluft, wird diese, beispielsweise aus einem Kompressor herausgeleitete Luft in den Luft/Luft-Wärmeaustauscher eingeleitet und dort durch die kühle und trockene Luft, die aus dem Kondensatabscheider in den Luft/Luft-Wärmeaustauscher geleitet wird, vorgekühlt. Diese Vorkühlung kann dabei im Einfachgegenstrom- oder Mäandergegenstromprinzip erfolgen.

Die Luft wird anschließend durch einen geschlossenen Kanal von dem Luft/Luft-Wärmeaustauscher in den Luft/Kältemittelwärmeaustauscher geführt und dort mithilfe des im Gegenstrom oder Mäandergegenstrom fließenden Kältemittels bis zum Taupunkt abgekühlt.

Hier beginnt dann die in der Luft enthaltene Feuchtigkeit zu kondensieren. Durch eine weitere Abkühlung der Luft zu tieferen Temperaturen erhöht sich die Menge der kondensierenden Feuchtigkeit, so dass am Übergang vom Luft/Kältemittel-Wärmeaustauscher zum Kondensatabscheider ein Gemisch aus gasförmiger Luft und darin enthaltenen mehr oder weniger feinen flüssigen Kondensattropfen vorliegt.

Dieses Gemisch strömt sodann in den Kondensatabscheider, in dem diese Tropfen aus dem Luftstrom entfernt werden. Für größere Tropfen reicht hierfür die Schwerkraft aus. Für feinere Tropfen ist ein Kontakt der Tropfen mit Wandflächen wie die Innenwände des Kondensatabscheiders bzw. einem Prallblech notwendig. Dort bleiben sie zunächst haften und fließen dann schwerkraftbedingt nach unten durch einen Kondensatauslass im Kondensatabscheider ab.

Solche Vorrichtungen haben sich an sich in der Praxis bewährt. Nachteilig bei den aus dem Stand der Technik bekannten Vorrichtungen ist, dass zur hinreichenden Trocknung der Luft der feuchte Luftstrom stets mit hoher Geschwindigkeit durch den Kondensatabscheider geführt wird und dadurch ein Teil der abgeschiedenen Feuchtigkeit durch den Luftstrom mitgerissen wird.

Aufgabe der vorliegenden Erfindung ist es, eine Vorrichtung zur Abkühlung und Trocknung von Luft bereitzustellen, mit der die oben genannten Nachteile beseitigt sind.

Diese Aufgabe wird durch eine Vorrichtung zur Abkühlung und Trocknung von Luft, insbesondere von Druckluftanlagen mit den Merkmalen des Anspruchs 1 gelöst.

Die erfindungsgemäße Vorrichtung weist einen Luft/Luft-Wärmeaustauscher mit einem Lufteinlass und einem Luftauslass auf, einen Kältemittel/Luft-Wärmeaustauscher mit einem Kältemitteleinlass und einem Kältemittelauslass, einen zwischen dem Luft/Luft-Wärmeaustauscher und dem Kältemittel/Luft-Wärmeaustauscher angeordneten Kondensatabscheider.

Der Kondensatabscheider weist eine Abscheidekammer mit einem Kondensatauslass auf. In der Abscheidekammer ist wenigstens eine geneigt zu einer Hauptdurchströmungsrichtung der Luft ausgerichtete Lamelle zur Kondensatabscheidung angeordnet.

Mit einer solchen Vorrichtung ist es nunmehr ermöglicht, die zu kühlende und zu trocknende Luft mit langsamer Strömungsgeschwindigkeit durch den Kondensatabscheider zu leiten, da durch die in der Abscheidekammer angeordneten wenigstens einen Lamelle eine direkte Durchströmung, d.h. ohne Richtungsänderung des Luftstroms, durch die Lamelle verhindert wird und so ein hinreichend großer Anteil der Feuchtigkeit an der Lamelle abgeschieden wird. Von der Lamelle kann das an dieser kondensierte Wasser nach unten in Richtung des Kondensatauslasses entlang der Lamelle und entlang der Wände der Abscheidekammer ablaufen.

Vorteilhafte Ausführungsvarianten der Erfindung sind Gegenstand der Unteransprüche.

Gemäß einer vorteilhaften Ausführungsvariante ist die wenigstens eine Lamelle an einander gegenüberliegenden Seitenwänden eines Gehäuses des Kondensatabscheiders gehalten.

Dadurch ist in einfacher Weise ein Abfließen des Kondensats über die Lamelle entlang der Seitenwände des Kondensatabscheiders ermöglicht.

Die wenigstens eine Lamelle weist gemäß einer Ausführungsvariante eine Vielzahl von Durchströmungsöffnungen auf.

Die Durchströmungsöffnungen sind dabei gemäß einer bevorzugten Weiterbildung in durch Nockenrücken miteinander verbundene Lamellenflanken der Lamelle eingebracht.

Die Lamellenflanken der wenigstens einen Lamelle sind gemäß einer bevorzugten Ausführungsvariante im Wesentlichen senkrecht zur Ebene der Seitenwände des Gehäuses des Kondensatabscheiders ausgerichtet.

Dadurch ist ein direktes Durchströmen der Lamelle ohne Richtungsänderung des Luftstroms verhindert.

Die wenigstens eine Lamelle ist gemäß einer weiteren bevorzugten Ausführungsvariante zu den gegenüberliegenden Seitenwänden des Gehäuses in einem Winkel von 20° bis 80° zueinander ausgerichtet.

Auch dies ermöglicht ein zuverlässiges, rasches Abfließen der kondensierten Feuchtigkeit von der Lamelle weg hin zu den Seitenwänden des Gehäuses.

Gemäß einer weiteren bevorzugten Ausführungsvariante sind zur Fixierung der wenigstens einen Lamelle an den gegenüberliegenden Seitenwänden des Gehäuses in die Abscheidekammer vorstehende Stege angeformt.

Dies ermöglicht ein einfaches Einschieben der Lamelle in die Abscheidekammer bei der Montage.

Besonders bevorzugt sind in der Abscheidekammer zwei Lamellen angeordnet.

Gemäß einer Ausführungsvariante der Erfindung ist im Bereich des Kondensatauslasses des Kondensatabscheiders ein Kondensatsammler angeordnet.

Dieser Kondensatsammler ist gemäß einer Ausführungsvariante an einer Gehäuseaußenwand des Kondensatabscheiders befestigt, insbesondere stoffschlüssig befestigt, insbesondere angelötet oder angeschweißt.

Gemäß einer alternativen Ausführungsvariante ist der Kondensatsammler in eine den Kondensatauslass aufweisende Gehäusewand des Kondensatabscheiders integriert ausgebildet, insbesondere angegossen.

Der Luft/Luft-Wärmeaustauscher, der Kältemittel/Luft-Wärmeaustauscher und der Kondensatabscheider sind bevorzugt aus Aluminium gefertigt. Dadurch ist die erfindungsgemäße Vorrichtung deutlich leichter relativ zu beispielsweise Edelstahl-Wärmeaustauschern.

Nachfolgend werden bevorzugte Ausführungsbeispiele anhand der beiliegenden Figuren näher erläutert.

### Es zeigen:

- Figuren 1 und 2: schematische isometrische Darstellungen einer ersten Ausführungsvariante einer erfindungsgemäßen Vorrichtung,
- Figur 3: eine isometrische Explosionsdarstellung der in den Fig. 1 und 2 gezeigten Vorrichtung,
- Figur 4: eine Schnittansicht durch einen Kondensatabscheider der Vorrichtung,
- Figuren 5 und 6: Draufsichten auf einen Rahmen der Wärmeaustauscher mit darin eingelegtem Turbulator,
- Figur 7: eine isometrische Darstellung auf den in Fig. 3 gezeigten Kondensatabscheider mit darin angeordneten Lamellen,
- Figur 8: eine weitere isometrische Darstellung auf den Kondensatabscheider
- Figur 9: eine isometrische Darstellung einer Ausführungsvariante in dem Kondensatabscheider angeordneten Lamelle,
- Figuren 10 bis 12: den Fig. 1 bis 3 entsprechende Darstellungen einer Ausführungsvariante einer erfindungsgemäßen Vorrichtung,
- Figur 13: eine der Fig. 4 entsprechende Schnittansicht durch eine alternative Ausführungsvariante eines Kondensatabscheiders mit integriertem Kondensatsammler und
- Figuren 14 bis 18: Draufsichten auf unterschiedliche Stapelschichten des Luft/LuftWärmeaustauschers und des Luft/KältemittelWärmeaustauschers.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position des Luft/Luft-Wärmeaustauschers, Kältemittel/Luft-Stapelschalen-Wärmeaustauschers, Kondensatabscheider, Lamelle, Abscheidekammer und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

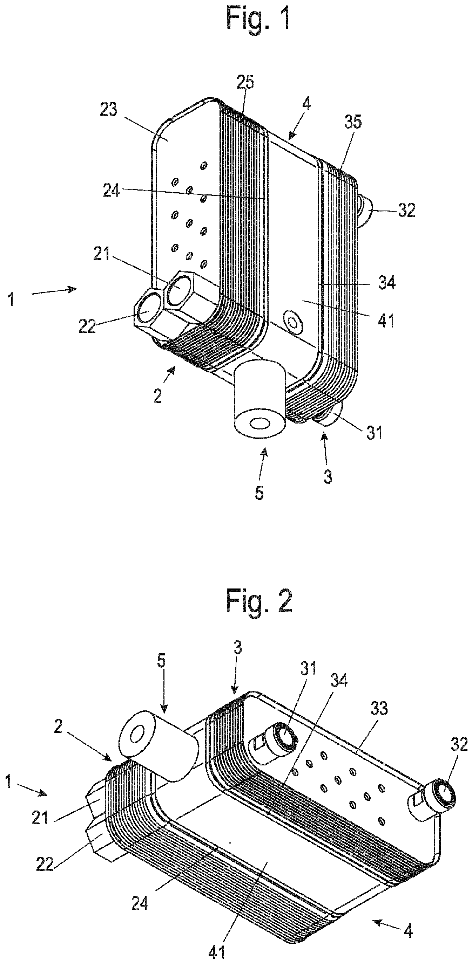

In den Figuren 1 bis 3 und 10 bis 12 ist mit dem Bezugszeichen 1 insgesamt eine hier als Kältetrockner ausgebildete Vorrichtung zur Abkühlung und Trocknung von Luft, insbesondere für Druckluftanlagen bezeichnet.

In beiden Ausführungsvarianten besteht der Kältetrockner im Wesentlichen aus einem Luft/Luft-Wärmeaustauschers 2 mit einem Lufteinlass 21 und einem Luftauslass 22 sowie einem Kältemittel/Luft-Wärmeaustauscher 3 mit einem Kältemitteleinlass 31 und einem Kältemittelauslass 32 sowie einem zwischen dem Luft/Luft-Wärmeaustauscher 2 und dem Kältemittel/Luft-Wärmeaustauscher 3 angeordneten Kondensatabscheider 4.

Sowohl der Luft/Luft-Wärmeaustauscher 2 als auch der Kältemittel/Luft-Wärmeaustauscher 3 besteht in der in den Figuren 1 bis 6 gezeigten Ausführungsvariante aus einer Vielzahl übereinander gestapelter Schalen 7, die im Fall des Luft/Luft-Wärmeaustauschers 2 der Durchleitung zweier Luftströme, vorzugsweise im Gegenstrom dienen und im Fall des Kältemittel/Luft-Wärmeaustauschers 3 der Durchströmung einerseits eines Kältemittels und andererseits eines Luftstroms, bevorzugt ebenfalls im Gegenstromverfahren dienen.

Die prinzipielle Funktionsweise der Vorrichtung entspricht der in der Beschreibungseinleitung anhand des Standes der Technik beschriebenen Funktionsweise, bei der warme und feuchte Luft, insbesondere Druckluft, beispielsweise aus einem Kompressor über einen Lufteinlass 21 in den Luft/Luft-Wärmeaustauscher 2 eingeleitet wird und dort durch aus dem Kondensatabscheider 4 kommende kühle, trockene Luft vorgekühlt wird.

Je nach Ausbildung der einzelnen Schalen 7 des Luft/Luft-Wärmeaustauschers 2 erfolgt dabei die Vorkühlung im Einfachgegenstrom oder auch im Mäandergegenstromprinzip.

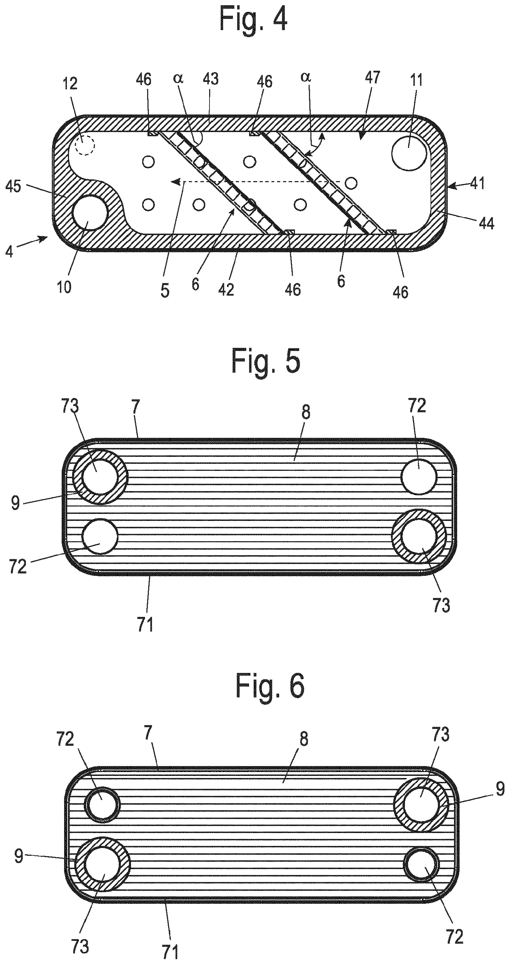

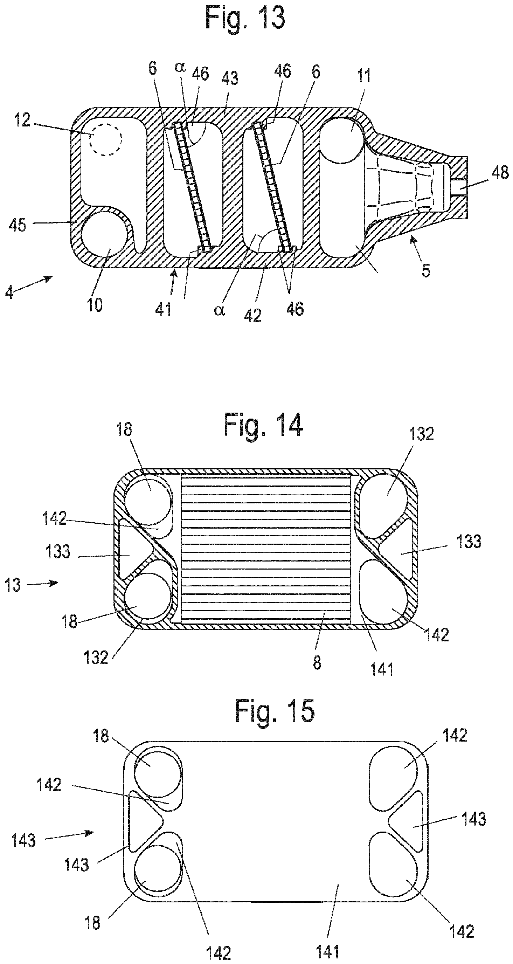

Die vorgekühlte Luft durchtritt anschließend einen rohrförmigen Luftdurchlass 10 in einer der stirnseitigen Gehäusewand 45 des Kondensatabscheiders 4, wie es beispielhaft in den Figuren 4 und 13 gezeigt ist.

Von diesem Luftdurchlass 10 im Kondensatabscheider 4 gelangt die vorgekühlte Luft direkt in den Kältemittel/Luft-Wärmeaustauscher 3.

In dem Kältemittel/Luft-Wärmeaustauscher 3 wird die Luft ebenfalls bevorzugt im Gegenstromprinzip an dem durch den Kältemittel/Luft-Wärmeaustauscher 3 geführten Kältemittel geführt und dadurch weiter abgekühlt.

Die kalte feuchte Luft wird anschließend über einen in Figur 6 gezeigten Lufteinlass 11 in eine Abscheidekammer 47 des Kondensatabscheiders 4 geführt.

In der Abscheidekammer 47 des Kondensatabscheiders 4 ist wenigstens eine winklig zu einer Hauptdurchströmungsrichtung S der Luft ausgerichtete Lamelle 6 zur Kondensatabscheidung angeordnet.

Bei den hier dargestellten Ausführungsvarianten gemäß Figuren 4, 7, 8 und 13 sind zwei solcher Lamellen 6 in der Abscheidekammer 47 angeordnet. Die beiden Lamellen 6 sind dabei in vorbestimmtem Abstand parallel zueinander in der Abscheidekammer 47 angeordnet.

Die kalte feuchte Luft wird in der Abscheidekammer 47 durch die Lamellen 6 hindurchgeführt in Richtung eines aus der Abscheidekammer 47 herausführenden, in Figur 6 gezeigten Luftauslasses 12.

Bei der Durchströmung der kalten feuchten Luft durch die Abscheidekammer 47 kondensiert die Feuchtigkeit an der Lamelle 6 bzw. den Lamellen 6 sowie an den Innenwänden der Abscheidekammer 47. Das abgeschiedene Kondensat fließt sodann entlang der Lamelle(n) 6 und entlang der Seitenwände 42, 43 schwerkraftbedingt in Richtung eines Kondensatsammlers 5.

Die abgekühlte, trockene Luft strömt dann aus der Abscheidekammer 47 durch den Luftauslass 12 weiter in den Luft/Luft-Wärmeaustauscher 2, wo die abgekühlte trockene Luft dann durch Gegenstrom mit der feuchten warmen Luft wieder erwärmt und durch den Luftauslass 22 wieder dem Kompressor bzw. einem Druckluftnetz zugeführt wird.

Wie in den Figuren 4, 7, 8 und 13 gezeigt ist, sind die Lamellen 6 an einander gegenüberliegenden Seitenwänden 42, 43 eines Gehäuses 41 des Kondensatabscheiders 4 gehalten. Dazu sind bevorzugt an gegenüberliegenden Seitenwänden 42, 43 des Gehäuses 41 in die Abscheidekammer 47 vorstehende Stege 46 zur Fixierung der Lamellen 6 angeformt.

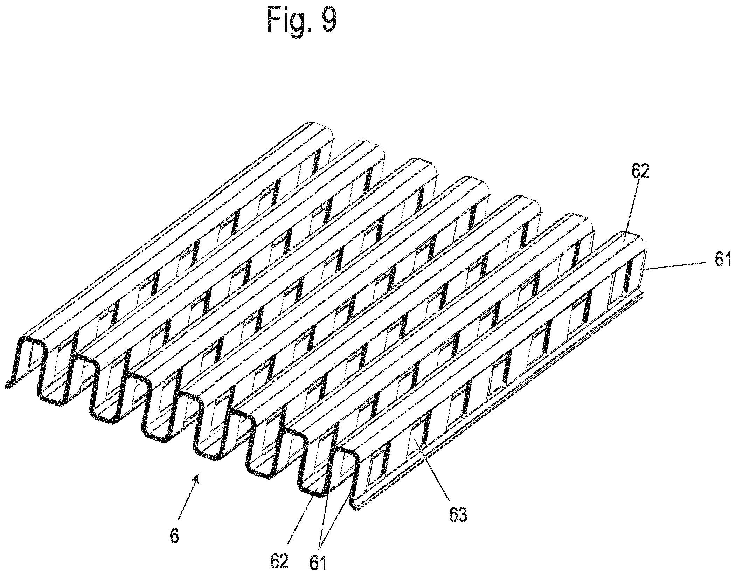

Eine Ausführungsvariante einer solchen Lamelle 6 ist im Detail in Figur 9 dargestellt.

Wie in dieser Figur gut zu erkennen ist, weist die Lamelle 6 eine Vielzahl von durch Nockenrücken 62 miteinander verbundene Lamellenflanken 61 auf. In den Lamellenflanken 61 sind eine Vielzahl von Durchströmungsöffnungen 63 ausgebildet.

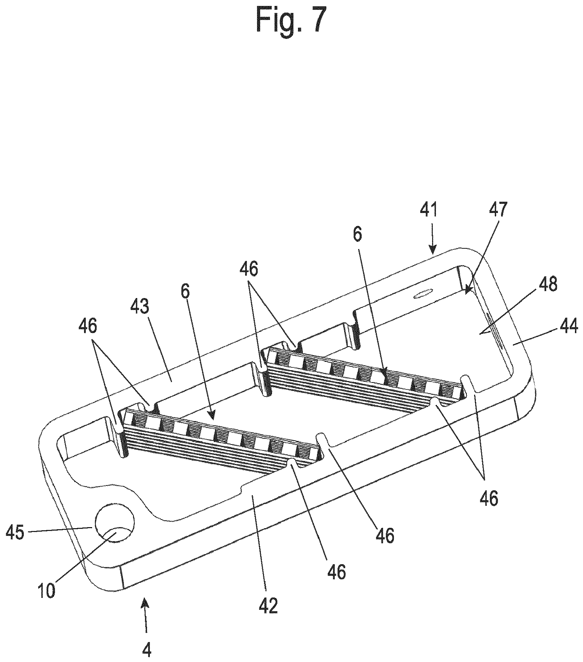

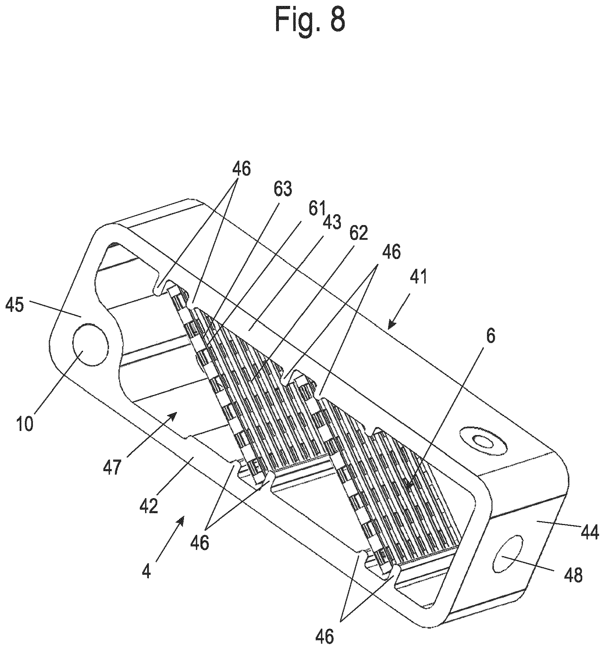

Wie weiter in den Figuren 7 und 8 gezeigt ist, sind die Lamellen 6 so in die Abscheidekammer 47 des Kondensatabscheiders 4 eingebaut, dass die Lamellenflanken 61 der Lamellen 6 im Wesentlichen senkrecht zur Ebene der Seitenwände 42, 43 des Gehäuses 41 des Kondensatabscheiders 4 ausgerichtet sind.

Dies bedeutet, dass die aus dem Lufteinlass 11 in die Abscheidekammer 47 einströmende kalte feuchte Luft auf ihrem Weg in Hauptdurchströmungsrichtung S auf die Nockenrücken 62 der Lamellen 6 prallt und zur Weiterströmung durch die Lamelle 6 durch die Durchströmungsöffnungen 63 sich senkrecht zur Hauptdurchströmungsrichtung S nach oben oder unten weiterströmen muss, um durch die Durchströmungsöffnungen 63 in den Lamellenflanken 61 der Lamelle 6 zu gelangen.

Dadurch bedingt ist die durchschnittliche Strömungsgeschwindigkeit der Luft gegenüber der Strömungsgeschwindigkeit des aus der in der Beschreibungseinleitung genannten Druckschrift genannten Kältetrockners deutlich reduziert und liegt vorzugsweise in einem Bereich unterhalb von 1,5 m/s.

Ein positiver Effekt dieser langsamen Durchströmungsgeschwindigkeit liegt darin, dass abgeschiedenes Kondensat durch die Luftströmung nicht mit dem Luftstrom mitgerissen wird und so zu einer erneuten Feuchtigkeitsanreicherung der Luft führt.

Zur Begünstigung eines Abfließens des an der Lamelle 6 kondensierten Kondensats sind die Lamellen 6 zu den gegenüberliegenden Seitenenden 42, 43 des Gehäuses 41 bevorzugt in einem Winkel α von 20° bis 80° zueinander ausgerichtet. Bei den hier gezeigten Ausführungsvarianten beträgt der Einstellwinkel α etwa 45°.

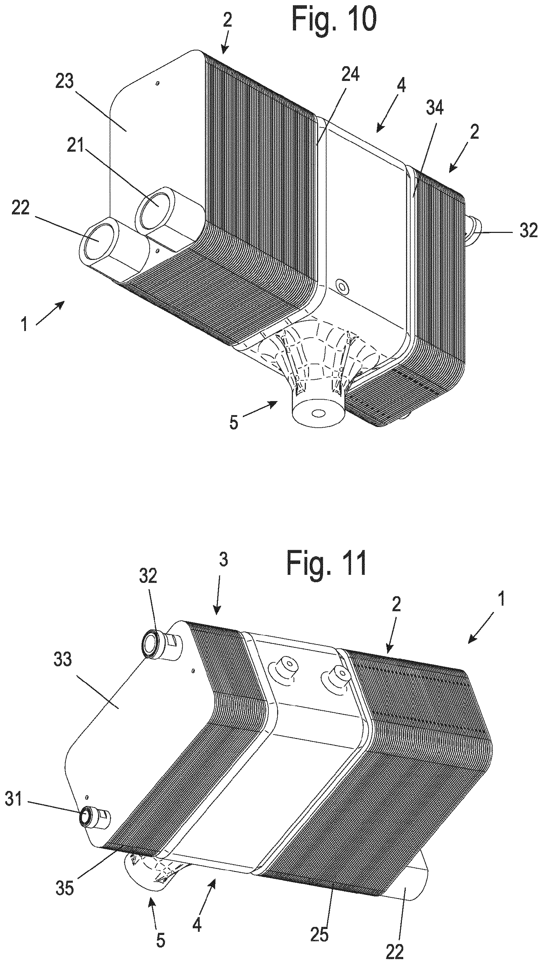

Die Ausführungsvariante gemäß Figuren 1 bis 6 unterscheidet sich von der Ausführungsvariante des in den Figuren 10 bis 18 gezeigten Kältetrockners 1 zum einen durch die eingesetzten Schalen des Luft/Luft-Wärmeaustauschers 2 und des Kältemittel/Luft -Wärmeaustauschers 3 und zum zweiten durch die Art der Anordnung des Kondensatsammlers 5.

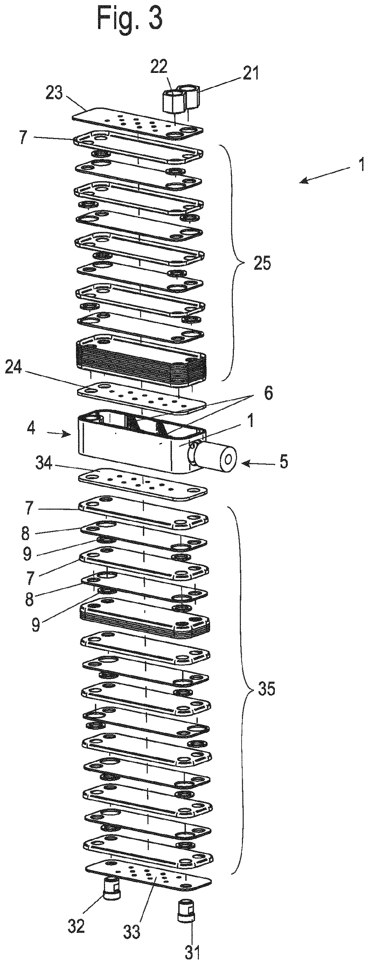

Während bei der anhand der Figuren 3, 7 und 8 gezeigten ersten Ausführungsvariante der Kondensatsammler 5 an einer Gehäuseaußenwand einer stirnseitigen Gehäusewand 44 des Kondensatabscheiders 4 befestigt ist, insbesondere stoffschlüssig befestigt ist, bevorzugt angelötet oder angeschweißt, ist bei der zweiten Ausführungsvariante, dargestellt in den Figuren 10 bis 13, der Kondensatsammler 5 in einer den Kondensatablass 48 aufweisende Gehäusewand 44 des Kondensatabscheiders 4 integriert ausgebildet.

Der Kondensatsammler 5 ist hier insbesondere bei Herstellung des Gehäuses 41 des Kondensatabscheiders 4 mit angegossen.

Über einen Kondensatauslass 48 des Kondensatabscheiders 4 wird bei der in den Figuren 1 bis 3, 7 und 8 gezeigten Ausführungsvariante das Kondensat aus der Abscheidekammer 47 heraus in den Kondensatsammler 5 geleitet.

Bei der in den Figuren 10 bis 13 gezeigten Ausführungsvariante bildet der Kondensatsammler 5 den Bodenbereich der Abscheidekammer 47. Hier ist am unteren Ende des Kondensatsammlers 5 der Kondensatablass 48 als Öffnung ausgebildet, um das gesammelte Kondensat abzulassen.

Beiden Ausführungsvarianten von Kältetrocknern 1 gemeinsam ist, dass der Luft/Luft-Wärmeaustauscher 2, der Kältemittel/Luft -Wärmeaustauscher 3 und der Kondensatabscheider 4 bevorzugt aus Aluminium gefertigt sind.

Bei der in den Figuren 1 bis 6 gezeigten Ausführungsvariante des Kältetrockners 1 besteht der Luft/Luft-Wärmeaustauscher 2 sowie der Kältemittel/Luft - Wärmeaustauscher 3 aus einer Vielzahl von aufeinander gestapelten Schalen 7 mit einem Rahmen 71, einem in den Rahmen 71 eingelegten Turbulator 8 und in dem Turbulator 8 und einem Schalenboden 74 vorgesehenen Durchlässen 72, 73.

Zur Steuerung, welcher der durch den Luft/Luft-Wärmeaustauscher 2 durchgeleiteten Luftströmen die jeweilige Schale 7 durchströmen soll, sind Dichtringe 9 vorgesehen, die zwischen einer Unterseite eines Schalenbodens 74 und der Oberseite einer im Turbulator 8 vorgesehenen Öffnung eingelegt sind und so die durch die jeweilige Öffnung 72 oder 73 einströmende Luft durch die jeweilige Schale 7 direkt hindurchleiten in die darüber oder darunter angeordnete Schale 7.

Bei der in den Figuren 10 bis 18 gezeigten Ausführungsvariante sind die Schalen 7 durch Rahmen 13, 15, 16 und Trennbleche 14, 17 ersetzt.

Wie in den Figuren 14 bis 18 gezeigt ist, bildet jeder der Rahmen 13, 15 und 16 eine Vielzahl von Kammern aus. Oberhalb und unterhalb der jeweiligen Rahmen 13, 15, 16 sind Trennplatten 14, 17 angeordnet.

Auch die Anordnung der Rahmen 13, 15, 16 und Trennplatten 14, 17 dient dazu, den Durchfluss der beiden Luftströme im Luft/Luft-Wärmeaustauscher 2 bzw. den Durchfluss des Kältemittels und der Luft im Kältemittel/Luft - Wärmeaustauscher 3 zu steuern.

Jeder der Rahmen 13, 15, 16 weist im Wesentlichen eine Durchflusskammer 131, 151, 161 auf, in die vorzugsweise ein Turbulator 8 eingelegt ist.

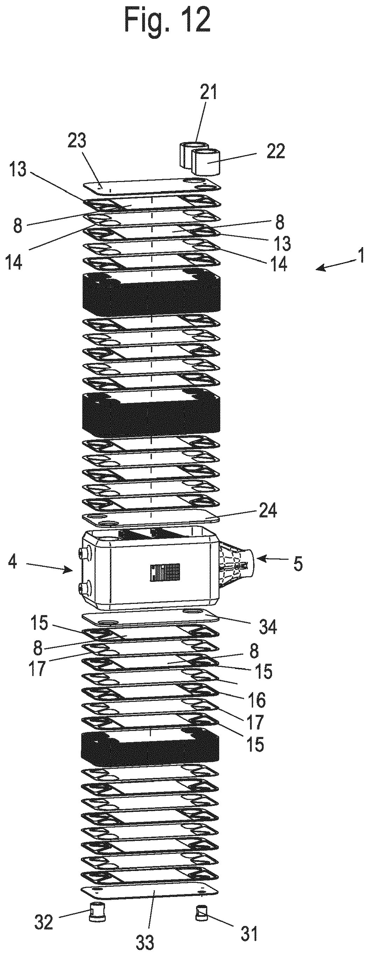

Im Luft/Luft-Wärmeaustauscher 2 kann, wie in Figur 12 dargestellt, in allen Schichten stets der gleiche Rahmen 13 eingesetzt werden. Der Rahmen 13 ist dabei so geformt, dass die Durchflusskammer 131 an diagonal gegenüberliegenden Enden so aufgeweitet ist, dass ein Luftkanal 18 in die Durchflusskammer 131 mündet.

Der Rahmen 13 bildet des Weiteren eine geschlossene Kammer 132 aus, so dass ein in diese Kammer 132 mündender Luftkanal 18 durch den Rahmen 13 hindurch zum darüber liegenden oder darunter liegenden Rahmen 13 geleitet wird, ohne in den Bereich der Durchflusskammer 131 gelangen zu können.

Der Rahmen 13 und auch die Rahmen 15 und 16 weisen des Weiteren noch Leckagekammern 133, 153, 163 auf, um gegebenenfalls auftretende Leckagen durch einen Leckagekanal abführen zu können.

Die im Luft/Luft-Wärmeaustauscher 2 eingesetzte Trennplatte 14 weist im Bereich ihrer Ecken Luftdurchlässe 142 in der Platte 141 der Trennplatte 14 auf. Auch die Trennplatte 14 weist Leckagedurchlässe 143 auf, die oberhalb bzw. unterhalb der Leckagedurchlässe 133, 153, 163 der Rahmen 13, 15, 16 angeordnet sind.

Im Kältemittel/Luft -Wärmeaustauscher 3 werden zwei unterschiedlich ausgebildete Rahmen 15, 16 eingesetzt. Der wesentliche Unterschied bei diesen Rahmen 15, 16 besteht darin, dass in einem ersten Rahmen 15 der Kältemittelkanal in einer geschlossenen Kammer 152 mündet und somit das Kältemittel nicht in die Durchflusskammer 151 dieses Rahmens 15 gelangen kann.

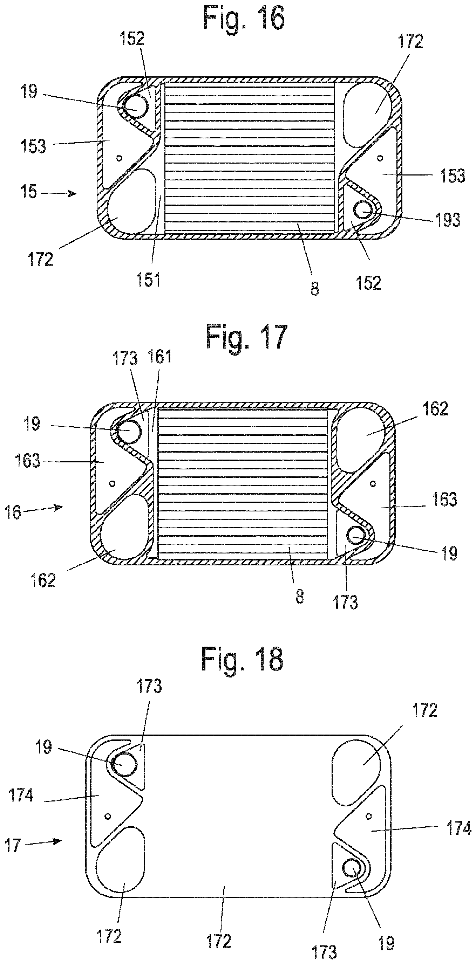

Bei dem Rahmen 15 wird die Durchflusskammer 151 entsprechend von Luft durchströmt, die durch Luftdurchlässe 172 in der darüber bzw. darunter angeordneten Trennplatte 17 vorgesehen sind, wie es in Figur 18 gezeigt.

Der in Figur 17 gezeigte weitere Rahmen 16 ist so aufgebaut, dass der Kältemittelkanal 19 in die Durchflusskammer 161 des Rahmens 16 mündet und so das Kältemittel den Rahmen 16 durchströmt, während der Luftdurchlass 172 bei dem Rahmen 16 von einer geschlossenen Kammer 162 umrahmt ist, so dass die Luft durch den Rahmen 16 lediglich vertikal durchgeleitet wird, ohne in die Durchflusskammer 161 gelangen zu können.

### Bezugszeichenliste

- 1: Kältetrockner

- 2: Luft/Luft-Wärmeaustauscher
- 21: Lufteinlass
- 22: Luftauslass
- 23: Deckelplatte
- 24: Bodenplatte
- 25: Stapel

- 3: Kältemittel/Luft -Wärmeaustauscher
- 31: Kältemitteleinlass
- 32: Kältemittelauslass
- 33: Deckel
- 34: Boden
- 35: Stapel

- 4: Kondensatabscheider
- 41: Gehäuse
- 42: Seitenwand
- 43: Seitenwand
- 44: Gehäusewand
- 45: Gehäusewand
- 46: Steg
- 47: Abscheidekammer
- 48: Kondensatablass
- 49: Durchlass

- 5: Kondensatsammler

- 6: Lamelle
- 61: Lamellenflanke
- 62: Nocken
- 63: Durchströmungsöffnung

- 7: Schale
- 71: Rahmen
- 72: Durchlass
- 73: Durchlass
- 74: Schalenboden

- 8: Turbulator
- 9: Dichtring

- 10: Luftdurchlass
- 11: Lufteinlass
- 12: Luftauslass

- 13: Rahmen
- 131: Durchflusskammer
- 132: Kammer
- 133: Leckagekammer

- 14: Trennplatte
- 141: Platte
- 142: Luftdurchlass
- 143: Leckagedurchlass

- 15: Rahmen
- 151: Durchflusskammer
- 152: Kammer
- 153: Leckagekammer

- 16: Rahmen
- 161: Durchflusskammer
- 162: Kammer
- 163: Leckagekammer

- 17: Trennplatte
- 171: Platte
- 172: Luftdurchlass
- 173: Kältemitteldurchlass
- 174: Leckagedurchlass

- 18: Luftkanal
- 19: Kältemittelkanal
- S: Hauptdurchströmungsrichtung
- α: Winkel

## Patentansprüche

1. Vorrichtung zur Abkühlung und Trocknung von Luft, insbesondere für Druckluftanlagen, aufweisend
- einen Luft/Luft-Wärmeaustauscher (2) mit einem Lufteinlass (21) und einem Luftauslass (22),
- einen Kältemittel/Luft-Wärmeaustauscher (3) mit einem Kältemitteleinlass (31) und einem Kältemittelauslass (32),
- einen zwischen dem Luft/Luft-Wärmeaustauscher (2) und dem Kältemittel/Luft-Wärmeaustauscher (3) angeordneten Kondensatabscheider (4)
- wobei der Kondensatabscheider (4) eine Abscheidekammer (47) mit einem Kondensatauslass (48) aufweist,
**dadurch gekennzeichnet, dass**
- in der Abscheidekammer (47) wenigstens eine geneigt zu einer Hauptdurchströmungsrichtung (S) der Luft ausgerichtete Lamelle (6) zur Kondensatabscheidung angeordnet ist.

2. Vorrichtung nach Anspruch 1, **dadurch gekennzeichnet, dass** die wenigstens eine Lamelle (6) an einander gegenüber liegenden Seitenwänden (42, 43) eines Gehäuses (41) des Kondensatabscheiders (4) gehalten ist.

3. Vorrichtung nach Anspruch 1 oder 2, **dadurch gekennzeichnet, dass** die wenigstens eine Lamelle (6) eine Vielzahl von Durchströmungsöffnungen (63) aufweist.

4. Vorrichtung nach Anspruch 3, **dadurch gekennzeichnet, dass** die Durchströmungsöffnungen (63) in durch Nockenrücken (62) miteinander verbundene Lamellenflanken (61) der Lamelle (6) eingebracht sind.

5. Vorrichtung nach Anspruch 4, **dadurch gekennzeichnet, dass** die Lamellenflanken (61) der wenigstens einen Lamelle (6) im Wesentlichen senkrecht zur Ebene der Seitenwänden (42, 43) des Gehäuses (41) des Kondensatabscheiders (4) ausgerichtet sind.

6. Vorrichtung nach einem der vorstehenden Ansprüche, **dadurch gekennzeichnet, dass** die wenigstens eine Lamelle (6) zu den gegenüberliegenden Seitenwänden (42, 43) des Gehäuses (41) in einem Winkel (α) von 20° bis 80° zueinander ausgerichtet sind.

7. Vorrichtung nach einem der vorstehenden Ansprüche, **dadurch gekennzeichnet, dass** an den gegenüberliegenden Seitenwänden (42, 43) des Gehäuses (41) in die Abscheidekammer (47) vorstehende Stege (46) zur Fixierung der wenigstens einen Lamelle (6) angeformt sind.

8. Vorrichtung nach einem der vorstehenden Ansprüche, **dadurch gekennzeichnet, dass** in der Abscheidekammer (47) zwei Lamellen (6) angeordnet sind.

9. Vorrichtung nach einem der vorstehenden Ansprüche, **dadurch gekennzeichnet, dass** im Bereich des Kondensatauslasses (48) des Kondensatabscheiders (4) ein Kondensatsammler (5) angeordnet ist.

10. Vorrichtung nach Anspruch 9, **dadurch gekennzeichnet, dass** der Kondensatsammler (5) an einer Gehäuseaußenwand des Kondensatabscheiders (4) befestigt, insbesondere stoffschlüssig befestigt, insbesondere angelötet oder angeschweißt ist.

11. Vorrichtung nach Anspruch 9, **dadurch gekennzeichnet, dass** der Kondensatsammler (5) in eine den Kondensatauslass (48) aufweisende Gehäusewand (44) des Kondensatabscheiders (4) integriert ausgebildet, insbesondere angegossen ist.

12. Vorrichtung nach einem der vorstehenden Ansprüche, **dadurch gekennzeichnet, dass** der Luft/Luft-Wärmeaustauscher (2), der Kältemittel/Luft-Wärmeaustauscher (3) und der Kondensatabscheider (4) aus Aluminium gefertigt sind.
